(19) Europäisches Patentamt
European Patent Office
Office européen des brevets

(11) **EP 3 998 557 B1**

(12) **EUROPEAN PATENT SPECIFICATION**

(45) Date of publication and mention
of the grant of the patent:
**16.08.2023 Bulletin 2023/33**

(21) Application number: **20911413.1**

(22) Date of filing: **28.10.2020**

(51) International Patent Classification (IPC):
*H04M 9/08* (2006.01)   *G06N 20/00* (2019.01)
*G10L 21/0316* (2013.01)   *G06N 3/08* (2023.01)
*H04R 3/02* (2006.01)   *G06N 3/044* (2023.01)
*G06N 3/04* (2023.01)

(52) Cooperative Patent Classification (CPC):
**H04R 3/02; G06N 3/044; G06N 3/08;
G10L 21/0316; H04M 9/082;** G06N 3/045

(86) International application number:
**PCT/CN2020/124244**

(87) International publication number:
**WO 2021/139327 (15.07.2021 Gazette 2021/28)**

(54) **AUDIO SIGNAL PROCESSING METHOD AND RELATED APPARATUS**

AUDIOSIGNALVERARBEITUNGSVERFAHREN UND ZUGEHÖRIGE VORRICHTUNG

PROCÉDÉ DE POSITIONNEMENT DE SIGNAL AUDIO ET APPAREIL ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.01.2020 CN 202010023045**

(43) Date of publication of application:
**18.05.2022 Bulletin 2022/20**

(73) Proprietor: **Tencent Technology (Shenzhen)
Company Limited
Shenzhen, Guangdong, 518057 (CN)**

(72) Inventors:
• **ZHANG, Jinliang**
  **Shenzhen, Guangdong 518057 (CN)**
• **YU, Tao**
  **Shenzhen, Guangdong 518057 (CN)**

(74) Representative: **Eisenführ Speiser
Patentanwälte Rechtsanwälte PartGmbB
Postfach 10 60 78
28060 Bremen (DE)**

(56) References cited:
  CN-A- 108 449 493   CN-A- 109 121 057
  CN-A- 109 637 552   CN-A- 110 536 215
  CN-A- 111 210 021   US-A1- 2018 090 152

**Description**

FIELD OF THE TECHNOLOGY

The present disclosure relates to computer technologies, and in particular, to audio signal processing.

BACKGROUND OF THE DISCLOSURE

With the development of technologies related to mobile terminals, more smart devices are used in people's daily life, and making a voice call through a smart device is particularly common. However, during a call process, a microphone at a local terminal may collect an audio signal originated from a speaker at an opposite terminal, and the audio signal loops in the voice call between the local terminal and the opposite terminal. Especially during a short-range voice call process, the audio signal becomes a howling due to continual loop gain.

Generally, a frequency shifter or a phase shifter for processing an input audio at the local terminal may be used to remove audio components having a phase same as the howling, thereby suppressing the howling. CN109121057A provides a method for intelligent hearing aid, including acquiring voice data; eliminating the echo in the frequency domain; extracting noise data from the echo-eliminated voice data; obtaining a noise classification resulting by performing noise classification on the noise data; and performing noise suppression on the echo-eliminated voice data according to the noise classification resulting, to obtain noise-reduced voice data.

US2018/090152A1 provides a parameter prediction device including: an environmental characteristic acquirer that acquires an environmental characteristic quantity set which quantifies one or more characteristics of a sound collection environment for an acoustic signal; a target setter that sets a target evaluation value set which provides one or more values obtained by quantifying one or more performances of processing of the acoustic signal, or one or more evaluation values of a processed acoustic signal; and a first predictor that inputs the environmental characteristic quantity set and the target evaluation value set as independent variables to a first prediction model, and predicts a control parameter set for controlling the acoustic signal processing. CN108449493 provides a voice call data processing method including: detecting that a howling detection event is triggered after the voice call group in a preset application is established successfully; obtaining voice call data in the mobile terminal; inputting the voice call data into a howling identification model, and determining whether the voice call data comprises howling voices or not according to an output result of the howling identification model, wherein the howling identification model is generated based on learning of howling characteristics when the howling voices are produced; and carrying out howling suppression processing on the voice call data when it is determined that the voice call data comprises the howling voices. CN109637552A provides a speech processing method for suppressing howling of audio equipment, including: preprocessing speech data, calculating a spectrum of a speech signal, extracting howling features, and suppressing a howling signal. CN110536215A provides an audio signal processing method which includes the following steps: framing a detected audio signal to obtain a multi-frame signal; performing windowing processing on each frame of signal, and then performing Fourier transform to obtain a frequency spectrum of each frame of signal; respectively analyzing the frequency spectrum of each frame of signal by using a preset frequency point clustering algorithm, and detecting a howling frame signal; detecting a howling frequency point from the howling frame signal by using a preset howling frequency point judgment criterion; and performing notch processing on the howling frequency point, and outputting a frame signal after the notch processing.

SUMMARY

In view of the previous description, the present disclosure provides an audio signal processing method which can locate a howling point effectively and suppress howling, thereby improving accuracy of audio signal processing. The invention is as defined in the appended claims.

As can be seen from the technical solutions above, the embodiments of the present disclosure have the following advantages:

A first audio input signal is obtained; then the first audio input signal is inputted into a machine learning model to obtain a first gain value for processing a frequency band in which an effective audio signal is located; the first audio input signal is processed according to the first gain value to obtain a second audio input signal; next the second audio input signal is checked to obtain a second howling point, the second howling point being used for indicating a howling point in a frequency band corresponding to an ineffective audio signal in the second audio input signal; and the second audio input signal is processed according to a second gain value to obtain an audio output signal, the second gain value being used for indicating a suppression parameter for the second howling point. In this way, the howling is suppressed for the audio input signal at an initial stage and therefore will not loop with gains. Due to the indication of howling points in the machine learning model, the convenience of model calculation, and further processing on the unprocessed howling point by using the second gain value, a rapid and thorough process of the howling suppression is implemented without affecting the effective audio signal, so that the accuracy and efficiency in audio processing are improved.

BRIEF DESCRIPTION OF THE DRAWINGS

FIG. 1 is a diagram of network architecture for running an audio signal processing system.

FIG. 2 is a process architecture diagram of audio signal processing according to an embodiment of the present disclosure.

FIG. 3 is a flowchart of an audio signal processing method according to an embodiment of the present disclosure.

FIG. 4 is a flowchart of another audio signal processing method according to an embodiment of the present disclosure.

FIG. 5 is a schematic diagram of a scenario for audio signal processing according to an embodiment of the present disclosure.

FIG. 6 is a schematic diagram of another scenario for audio signal processing according to an embodiment of the present disclosure.

FIG. 7 is a flowchart of another audio signal processing method according to an embodiment of the present disclosure.

FIG. 8 is a comparison diagram of audio signal processing according to an embodiment of the present disclosure.

FIG. 9 is a flowchart of another audio signal processing method according to an embodiment of the present disclosure.

FIG. 10 is a schematic diagram of an interface of an audio signal processing method according to an embodiment of the present disclosure.

FIG. 11 is a schematic diagram of an interface of another audio signal processing method according to an embodiment of the present disclosure.

FIG. 12 is a flowchart of a machine learning model training method according to an embodiment of the present disclosure.

FIG. 13 is a schematic flowchart of training of a machine learning model according to an embodiment of the present disclosure.

FIG. 14 is a schematic structural diagram of an audio signal processing apparatus according to an embodiment of the present disclosure.

FIG. 15 is a schematic structural diagram of a machine learning model training apparatus according to an embodiment of the present disclosure.

FIG. 16 is a schematic structural diagram of a terminal device according to an embodiment of the present disclosure.

FIG. 17 is a schematic structural diagram of a server according to an embodiment of the present disclosure.

DESCRIPTION OF EMBODIMENTS

The embodiments of the present disclosure provide an audio signal processing method and a related apparatus, which may be applied to a system or a program including an audio signal processing function in a terminal device. A first audio input signal is obtained; then the first audio input signal is inputted into a machine learning model to obtain a first gain value for processing a frequency band in which an effective audio signal is located; the first audio input signal is processed according to the first gain value to obtain a second audio input signal; next the second audio input signal is checked to obtain a second howling point, the second howling point being used for indicating a howling point in a frequency band corresponding to an ineffective audio signal; and the second audio input signal is processed according to a second gain value to obtain an audio output signal, the second gain value being used for indicating a suppression parameter for the second howling point. In this way, the howling is suppressed for the audio input signal at an initial stage and therefore will not loop with gains. Due to indication of howling points in the machine learning model, the convenience of model calculation, and further processing on the unprocessed howling point by using the second gain value, a rapid and thorough process of the howling suppression is implemented without affecting the effective audio signal, so that the accuracy and efficiency in audio processing are improved.

First, some terms to be used in the embodiments of the present disclosure are described as follows.

Howling: in a case that a sound signal acquired by a microphone is amplified by a speaker and then picked up again by the microphone, the signal is continuously superimposed and amplified in a feedback loop and an oscillation cycle is generated by a positive feedback, therefore the howling occurs.

Howling point: a frequency point in an audio signal at which loop gain is greater than or equal to 1.

Effective audio signal: a desired audio in the audio signal, such as a voice signal in a voice call.

Ineffective audio signal: an interference audio in the audio signal, such as background noise or an echo.

Gain value: a degree of change in processing an audio signal at a specified frequency band, used for indicating a suppression factor applied on an audio signal corresponding to a howling point in a howling suppression scenario.

Pitch period: a time period from opening to closing of vocal cords in human vocalization, a parameter that may be used for indicating the effective audio signal.

Machine learning model: a model used for adjusting a parameter based on a given sample, so that an output has characteristics similar to the given sample.

Power spectrum: the change of signal power as frequency varies, namely, the distribution of signal power in frequency domain.

Analog-to-digital converter (ADC): an electronic component configured to convert an analog signal into a digital signal.

Recurrent neural network (RNN) model: a recursive neural network that takes data sequence as an input and recurs in an evolution direction of the sequence, in which all nodes (recurrent units) are connected in a chain.

Convolutional neural network (CNN) model: a convolutional neural network has a characterization learning capability and can classify input information in a translation-invariant manner according to a hierarchical structure thereof.

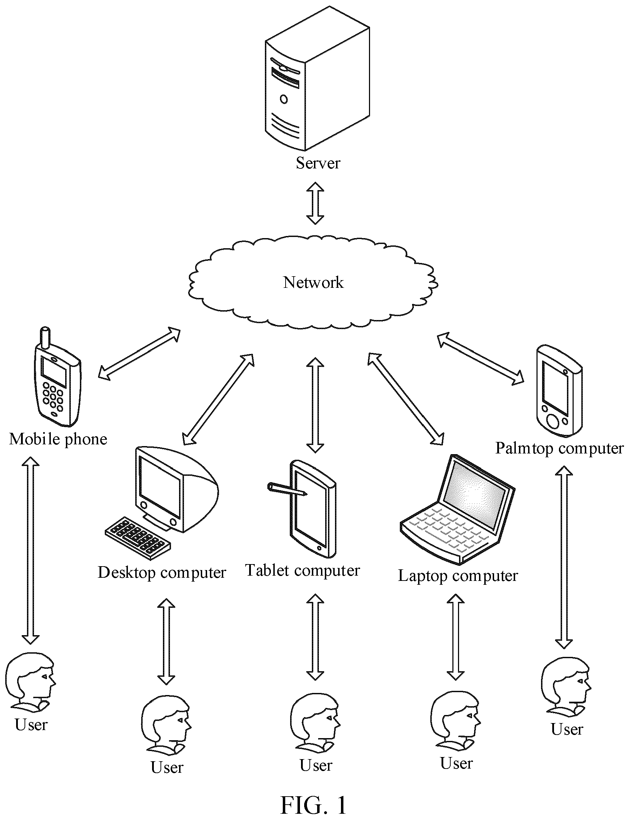

It is to be understood that the audio signal processing method provided by the present disclosure may be applied to a system or a program including an audio signal processing function in a terminal device, for example, as a voice plug-in for a game. Specifically, an audio signal processing system may be run in network architecture as shown in FIG. 1. FIG. 1 is a diagram of network architecture for running an audio signal processing system. As shown, the audio signal processing system can perform audio signal processing on a plurality of information sources. A terminal is connected to a server through a network to receive an audio signal sent by another terminal, and perform the audio signal processing method provided by the present disclosure on the received signal to suppress howling and obtain an audio output, so that an audio interaction between multiple terminals is implemented. It can be understood that although a variety of terminal devices are shown in FIG. 1, more or fewer types of terminal devices may be involved in the audio signal processing in actual scenarios, and the specific number and types depend on the actual scenarios, which is not limited herein. In addition, one server is shown in FIG. 1, but in actual scenarios multiple servers may be involved, especially in a scenario of multi-content application interaction, and the specific number of servers depends on the actual scenario.

The audio signal processing method provided in this embodiment may be performed offline. In other words, no server is involved in the audio signal processing. In this case, the terminal conducts local audio signal interaction with another terminal, and then performs audio signal processing between the terminals.

It can be understood that the audio signal processing system may be run on a personal mobile terminal, for example, as an application such as a voice plug-in for a game, or may be run on a server, or may be run as a third-party device to perform audio signal processing, to obtain an audio signal processing result corresponding to an information source. The audio signal processing system may be run in the foregoing devices as a program, or be run in the foregoing devices as a system component, or may be used as a type of cloud service program. The specific operation mode depends on actual scenarios, which is not limited herein.

With the development of technologies related to mobile terminals, more smart devices are used in people's daily life, and making a voice call through a smart device is particularly common. However, during a call process, a microphone at a local terminal may an audio signal originated from a speaker at an opposite terminal, and the audio signal loops in the voice call between the local terminal and the opposite terminal. Especially during a short-range voice call, the audio signal becomes a howling due to continual loop gain.

Generally, a frequency shifter or a phase shifter for processing an input audio at the local terminal may be used to remove audio components having a phase same as the howling, thereby suppressing the howling.

However, the scheme of using the frequency shifter or the phase shifter requires a long processing time and is not suitable for real-time processing of voice call. Moreover, the phase removal fixed at the howling point causes damage to the sound quality of the effective audio and affects the accuracy in audio processing.

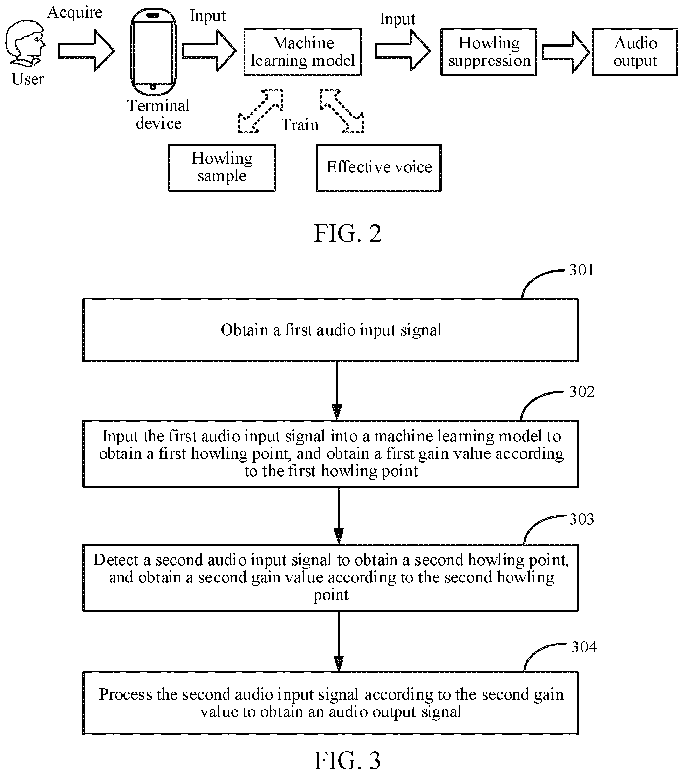

To resolve the foregoing problems, the present disclosure provides an audio signal processing method, which is applied to a process framework of audio signal processing shown in FIG. 2. FIG. 2 is a process architecture diagram of audio signal processing according to an embodiment of the present disclosure. First, a terminal device acquires voice of a user and converts the voice into an audio signal. The audio signal is input into a trained machine learning model, to determine and suppress a howling point, perform gain control for an unprocessed howling point, so as to obtain a howling-suppressed audio signal as an output.

It can be understood that the method provided by the present disclosure may be written as a program, which is used as a processing logic in a hardware system, or as an audio signal processing apparatus, to implement the processing logic in an integrated or externally connected manner. As an implementation, the audio signal processing apparatus obtains a first audio input signal; then inputs the first audio input signal into a machine learning model to obtain a first gain value for processing a frequency band in which an effective audio signal is located; processes the first audio input signal according to the first gain value to obtain a second audio input signal; checks the second audio input signal to obtain a second howling point, the second howling point being used for indicating a howling point in a frequency band corresponding to an ineffective audio signal; and processes the second audio input signal according to a second gain value to obtain an audio output signal, the second gain value being used for indicating a suppression parameter for the second howling point. In this way, the howling is suppressed for the audio input signal at an initial stage and therefore will not loop with gains. Due to indication of a howling point in the machine learning model, the convenience of model calculation, and further processing on the unprocessed howling point by using the second gain value, a rapid and thorough process of the howling suppression is implemented without affecting the effective audio signal, so that the accuracy and efficiency in audio processing are improved.

With reference to the process architecture, the audio signal processing method in the present disclosure is described below. FIG. 3 is a flowchart of an audio signal processing method according to an embodiment of the present disclosure. The method includes at least the following steps.

In 301: a first audio input signal is obtained.

In this embodiment, the first audio input signal may be an audio signal initially obtained when a voice call is started, or may be an audio signal obtained after a call lasts for a period of time. Specifically, the howling generates when an audio signal continuously gains in a feedback loop, i.e., due to accumulated feedback gains. The feedback loop include a microphone at a local terminal and a speaker at an opposite terminal. Therefore, an audio signal at a different time period may have different accumulated feedback gain. The audio signal processing method provided by the present disclosure may be invoked immediately, or may be invoked after the feedback gain becomes greater than or equal to 1 since the generation of howling requires a feedback gain of the audio signal in the loop to be greater than or equal to 1.

Optionally, the obtained first audio input signal may be an amplified signal. Specifically, an acquired signal, which may be acquired by a microphone or another acquisition device, is obtained; the acquired signal is converted into a digital signal, for example, by an ADC; the digital signal is inputted to an amplifier to obtain the first audio input signal. Because the first audio input signal is amplified, it is convenient for a user to listen and convenient for a subsequent howling point filtering process in the present disclosure.

In addition, the acquired signal from the acquisition device may contain obvious noise, such as a signal with a frequency far beyond voice range. In this case, noise filtering may be performed. Specifically, the digital signal is inputted into an amplifier to obtain an amplified signal; then the amplified signal is processed according to a filter parameter to obtain a filtered amplified signal; and the filtered amplified signal is transformed into frequency domain by Fourier transformation to obtain the first audio input signal. The filter parameter may be a fixed value, or may be set according to a frequency band corresponding to common noise in historical records.

In 302: the first audio input signal is input into a machine learning model to obtain a first howling point, and a first gain value is obtained according to the first howling point.

In this embodiment, the first howling point is used for indicating a howling point in a frequency band corresponding to an effective audio signal in the first audio input signal; and the first gain value is used for indicating a suppression parameter for the first howling point. The first audio input signal is processed according to the first gain value to obtain a second audio input signal. In addition, the machine learning model is trained with a plurality of training signals, the training signals include a plurality of howling point samples, and the first howling point is used for indicating the howling point in the frequency band corresponding to the effective audio signal.

Because howling points differ from effective audio in frequency band distribution or energy features, feature extraction may be performed by determining a plurality of features in the audio input signal. These features may be selected from features of the effective audio signal, for example, frequency band distribution, a position of a pitch period, a signal fluctuation frequency, or the like. Then the extracted features are inputted into the machine learning model to determine a corresponding first howling point. Accordingly, a first gain value corresponding to the first howling point is determined.

Specifically, the feature extraction may be performed based on the effective audio signal. According to a first aspect, the feature extraction is performed based on parameter feature of the effective audio signal, for example, Mel-scale frequency cepstral coefficient (MFCC) of the effective audio signal, or mathematical transformation of the coefficient. According to a second aspect, the feature extraction is performed based on biological feature of the effective audio signal, for example, a pitch period of the effective audio signal, because an audio signal of the human voice below 500 Hz has a pitch period while a howling signal does not. According to a third aspect, the feature extraction is performed based on waveform feature of the effective audio signal, for example, the fluctuation of the effective audio signal in a specific frequency band, because the effective audio signal has a feature of short-term stability. Through the feature extraction, the effective audio signal may be distinguished from the signal corresponding to the howling point, so that the machine learning model can learn the features of the effective audio signal and can have improved accuracy in extracting the effective audio signal.

The features listed above are exemplary. The feature may be indicative of the effective audio signal, or indicative of the howling signal, or indicative of feature distinguishing the effective audio signal from the howling signal, which is not limited herein.

Optionally, considering different frequencies for acquiring the input signal in different scenarios, the first audio input signal may be adjusted to a target frequency for transformation into the frequency domain. For example, a sampling rate of 16 KHz is commonly used for voice call on mobile phone, and therefore the target frequency is adjusted to 16 KHz; then a plurality of sampling points in the first audio input signal transformed into the frequency domain are determined; and a plurality of audio features are extracted based on the sampling points. In this way, the input signal is processed in multiple threads and the efficiency for audio processing is improved.

In addition, in the process of transforming the first audio input signal from a time domain into the frequency domain, for better periodicity of the time domain signal required in the Fourier transform and less signal omission, the input signal may be divided with a window function. In other words, the first audio input signal transformed into the frequency domain is divided based on the window function to obtain a plurality of sub-bands; and then a plurality of sampling points in the sub-bands are determined. The window function may be a rectangular window, a Gaussian window, a Kaiser window, or the like, and the specific form of the function depends on an actual scenario.

In 303: a second audio input signal is checked to obtain a second howling point, and a second gain value is obtained according to the second howling point.

In this embodiment, the first gain values correspond to a plurality of howling points in the first audio input signal, each howling point corresponds to a plurality of frequency bands, and a set of these frequency bands is called a sub-band. Therefore, the first gain values may include a plurality of gain values for howling suppression, each being a floating-point number within the range from 0 to 1. The first gain values are inputted into the first audio input signal, and each sub-band is multiplied by an attenuation gain for howling suppression corresponding to be sub-band, so as to obtain a result, i.e., the second audio input signal, with the machine having learned howling suppression.

It can be understood that the second howling point is used for indicating a howling point in a frequency band corresponding to an ineffective audio signal in the second audio input signal, that is, the howling point that does not belong to the frequency band corresponding to the effective audio signal. Because there may be a howling point corresponding to a frequency band of an unprocessed ineffective audio signal in machine model training, a secondary gain processing is performed to detect the second howling point.

Specifically, the second howling point may be detected by: obtaining a power spectrum corresponding to the second audio input signal; detecting, in the power spectrum, an extreme value such as a maximum power value in the power spectrum, or a value range set based on the maximum power value; determining a corresponding candidate frequency point, which may be a howling point, according to the extreme value; and determining the second howling point according to the candidate frequency point. That is, phase and feedback gain of the candidate frequency point are detected, and in a case that the phase is consistent and the feedback gain is greater than or equal to 1, the candidate frequency point is determined as the second howling point. Through the determining of the extreme value in the power spectrum, the change of gains of frequency points can be visually determined because the power corresponding to a howling point is usually greater than the power of a general frequency point, so that the accuracy in howling point recognition is improved.

Optionally, the second howling point may be determined based on a peak-to-average ratio, that is, a plurality of frequency points adjacent to the candidate frequency point are obtained to determine a candidate range; then an average frequency value of the frequency points in the candidate range is determined to obtain the peak-to-average ratio; and in a case that the peak-to-average ratio is greater than a howling threshold, the candidate frequency point is determined as the second howling point. To avoid the impact of extreme values caused by accidental events on the recognition, the howling points may be determined by the peak-to-average ratio, so that a range of reference is expanded and the accuracy in howling point recognition is further improved.

Optionally, because the howling points may appear periodically, the howling points may also be determined by statistical analysis of a historical record. For example, in a possible scenario, the howling points tend to be concentrated in a frequency band above 2 KHz, and the energy of the voice signal is mainly concentrated in a frequency band below 2 KHz. Then the howling points are determined based on the peak-to-average ratio; or further check may be performed based on locations where the howling points appear in the historical record. For example, in a case that the howling points are concentrated in 2 KHz to 3 KHz in the historical record, secondary detection is performed on this range in the next howling point recognition. For the specific manner of check, reference may be made to the recognition based on the extreme value of the power spectrum or the peak-to-average ratio as described above.

It can be understood that, the frequency band where the howling points are concentrated depends on a specific scenario, that is, in different scenarios the howling points may be concentrated in higher or lower frequency band. The description herein is only to illustrate the method for obtaining the howling points based on analysis of the historical record, and the disclosure is not limited herewith.

In 304, the second audio input signal is processed according to the second gain value to obtain an audio output signal.

In this embodiment, the second gain value is used for indicating a suppression parameter for the second howling point, that is, a suppression factor applied on a frequency band corresponding to the second howling point. The secondary filtering of howling point ensures the accuracy and the significant effect of howling suppression. The second gain value may be empirically set to a floating-point value ranging from 0 to 1, or may be calculated based on the energy of upper and lower adjacent sub-bands.

In addition, after the second audio input signal is processed according to the second gain value, a processed signal may be transformed into time domain to be subjected to notch processing, which is a type of filter, to further eliminate the howling points.

In the foregoing embodiments, a first audio input signal is obtained; then the first audio input signal is inputted into a machine learning model to obtain a first gain value for processing a frequency band in which an effective audio signal is located; the first audio input signal is processed according to the first gain value to obtain a second audio input signal; next the second audio input signal is checked to obtain a second howling point, the second howling point being used for indicating a howling point in a frequency band corresponding to an ineffective audio signal in the second audio input signal; and the second audio input signal is processed according to a second gain value to obtain an audio output signal, the second gain value being used for indicating a suppression parameter for the second howling point. In this way, the howling is suppressed for the audio input signal at an initial stage and therefore will not loop with gains. Due to the indication of a howling point in the machine learning model, the convenience of model calculation, and further processing on the unprocessed howling point by using the second gain value, a rapid and thorough process of the howling suppression is implemented without affecting the effective audio signal, so that the accuracy and efficiency in audio processing are improved.

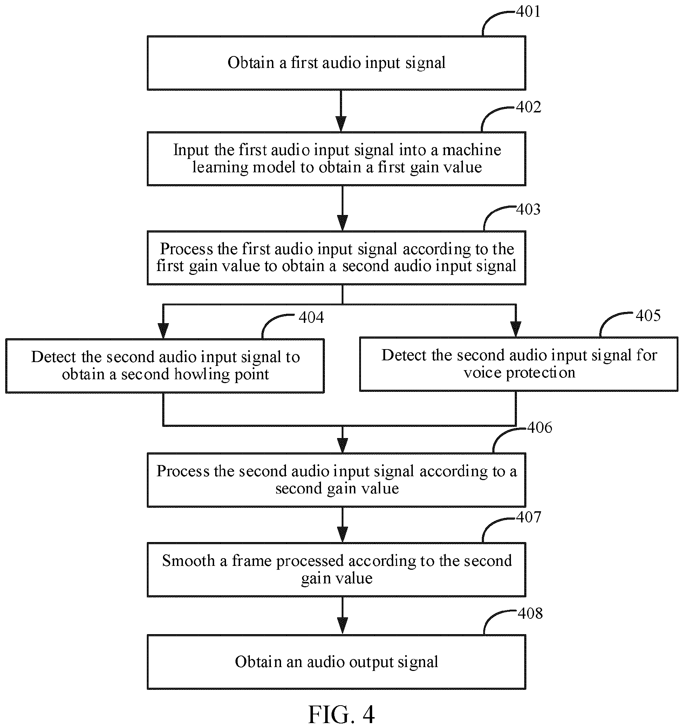

In the foregoing embodiments, the process of audio signal processing is described. However, the effective audio signal may be affected in the secondary howling suppression. To avoid such a situation, reference is made to FIG. 4. FIG. 4 is a flowchart of another audio signal processing method according to an embodiment of the present disclosure, and the method includes at least the following steps.

In 401, a first audio input signal is obtained.

In 402, the first audio input signal is inputted into a machine learning model to obtain a first gain value.

In 403, the first audio input signal is processed according to the first gain value to obtain a second audio input signal.

In 404, the second audio input signal is checked to obtain a second howling point.

In this embodiment, steps 401 to 404 are similar to steps 301 to 304 in the embodiment of FIG. 3, and for related features and description, reference may be made to the description above, which are not repeated herein.

In 405, the second audio input signal is checked for voice protection.

In this embodiment, the voice protection is to ensure the integrity of the effective audio signal. Specifically, feature information in the effective audio signal is first obtained, the feature information being determined based on waveform features indicated by the effective audio signal. For example, for the waveform feature indicated by the effective audio signal, a voiced sound has formants and an unvoiced sound has large high-frequency energy and a stable energy slope with respect to frequency axis. Then the corresponding effective audio signal in the second audio input signal is detected according to the feature information. A lock operation is further performed on the effective audio signal, the lock operation being used for indicating an object on which the second gain value does not act. In other words, a processing frequency band corresponding to the second gain value may include the effective audio signal which is locked in this step so as not to be subjected to the gain processing.

Optionally, the voice protection for the effective audio signal may also be performed based on a historical record indicating a voice frequency band. In other words, frequency band distribution of the effective audio signal is recorded, and frequency bands with a large distribution weight are detected and filtered one by one.

In 406, the second audio input signal is processed according to a second gain value.

In 407, a frame processed according to the second gain value is smoothed.

In this embodiment, to prevent a harsh audio output signal caused by a large difference of suppression gains between frames, that is, an abrupt audio change, gained frames associated with howling points corresponding to the second gain value may be smoothed. Specifically, a gained frame and adjacent frames may be processed with the following formula:

$$\tilde{g}ain2(m,k) = \alpha * \tilde{g}ain2(m-1,k) + (1-\alpha)\,gain2(m,k)$$

where $\alpha$ is a smooth factor ranging from 0 to 1; $\tilde{g}ain2(m\text{-}1,k)$ is a suppression gain of a previous frame; m is a frame index; and k is a frequency point index. In the formula above, by adjusting a gain difference between adjacent frames, the gains of the adjacent frames are more proximately in linear distribution, the abrupt audio change is reduced, the audio output signal sounds smoother, and user experience is improved.

In 408, an audio output signal is obtained.

In this embodiment, the audio output signal is obtained by multiplying the gain parameter $\tilde{g}ain2(m,k)$ in step 407 by a value of a corresponding frequency point.

In the foregoing embodiments, the accuracy and resolution of the audio output signal are improved by detecting and locking the effective audio signal. In addition, by smoothing the gain parameter of adjacent gained frames, the gains of the adjacent frames are more proximately in the linear distribution, the abrupt audio change is reduced, the audio output signal sounds smoother, and the user experience is improved.

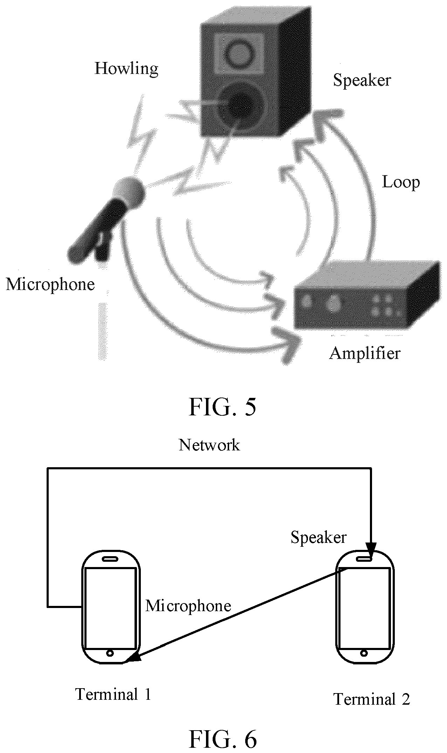

In the foregoing embodiments, the audio processing method for howling suppression is described. With reference to specific scenarios, the audio processing method for howling suppression is described below. FIG. 5 is a schematic diagram of a scenario for audio signal processing according to an embodiment of the present disclosure. A scenario, in which a microphone acquires and amplifies a voice signal for playback, is shown. Because a sound source (microphone) is too close to an amplification device (speaker), the sound signal acquired by the microphone is amplified by the speaker and then picked up again by the microphone. Hence the signal is continuously superimposed and amplified in a feedback loop and an oscillation cycle is generated by a positive feedback, which results in howling. A function of the oscillation generated in the positive feedback may be:

$$H(s) = \frac{G(s)}{1 - G(s)F(s)}$$

Correspondingly, the generation of howling requires that a phase of an input signal acquired by the microphone in the feedback loop is the same as a phase of a sound wave signal fed back to the speaker, that is:

$$\angle G(\omega_0)F(\omega_0) = n*2\pi$$

and a feedback loop gain is greater than or equal to 1, that is:

$$|G(\omega_0)F(\omega_0)| \geq 1$$

where G(s) is the input signal acquired by the microphone; F(s) is the sound wave signal fed back to the speaker; G(w0) is the phase of the input signal acquired by the microphone; F(w0) is the phase of the sound wave signal fed back to the speaker; and n is an integer parameter.

In this scenario, the audio signal processing method provided by the present disclosure may be performed in an amplifier. In other words, after an audio signal acquired by the microphone is transmitted to the amplifier, the audio signal processing process in the embodiment of FIG. 3 or FIG. 4 is immediately performed, and then an output signal is transmitted to the speaker for playback. As this cycle repeats, the howling can be suppressed.

Another possible scenario is shown in FIG. 6. FIG. 6 is a schematic diagram of another scenario for audio signal processing according to an embodiment of the present disclosure, showing a loop in a scenario in which the terminal outputs sound loudly. In a case that two terminals are close to each other, the sound from the speaker of the terminal on the right is picked up by the microphone of the terminal on the left. After pre-processing and signal conversion, the sound is sent to the terminal via a network and is played via the speaker. Then the sound is picked up again by the microphone of the terminal on the left. As this cycle repeats, when a loop gain is greater than or equal to 1 at a certain frequency point and the phase is positive, a howling point is formed at this point.

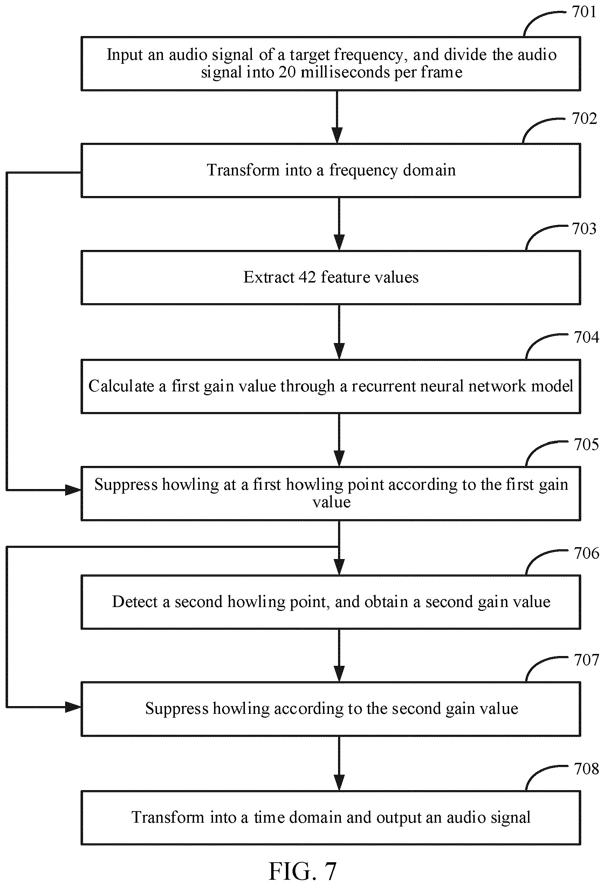

The howling suppression is described below with reference to a specific example. FIG. 7 is a flowchart of another audio signal processing method according to an embodiment of the present disclosure, and the method includes at least the following steps.

In 701, an audio signal of a target frequency is inputted, and the audio signal is divided into frames at every 20 milliseconds.

In this embodiment, considering that a mobile phone voice call is generally processed at a sampling rate of 16 KHz, the target frequency may be set to 16 KHz.

In 702, transformation into frequency domain is performed.

In this embodiment, the audio signal is windowed and transformed into frequency domain by Fourier transformation. The window function may be a rectangular window, a Gaussian window, a Kaiser window, or the like, and the specific form of the function depends on an actual scenario.

In 703, 42 feature values are extracted.

In this embodiment, the feature values may include 22 Mel-scale frequency cepstral coefficients, for which reference may be made to a parameter in a voice recognition process, that is, the effective audio signal; the feature values may further include first-order or second-order derivatives of the first 6 coefficients used for indicating voice features; the feature values may further include a pitch period, because a voiced sound of a voice signal has a pitch period while a howling signal does not at a frequency below 500 Hz; and the feature values may further include the detection of a non-stable feature value because the voice is short-term stable.

In 704, a first gain value is calculated with a RNN model.

In this embodiment, the machine learning model is a RNN model for modeling time series rather than for considering only input and output frames. The specific process of obtaining the first gain value is similar to step 302 in the embodiment of FIG. 3, which is not repeated herein.

In 705, howling suppression is performed with the first gain value at a first howling point.

In 706, a second howling point is detected, and a second gain value is obtained.

In 707, howling suppression is performed with the second gain value.

In 708, transformation into time domain is performed and an audio signal is outputted.

In this embodiment, steps 705-708 are similar to steps 303-305 in the embodiment of FIG. 3, and for related features and descriptions, reference may be made to the above, which are not repeated herein.

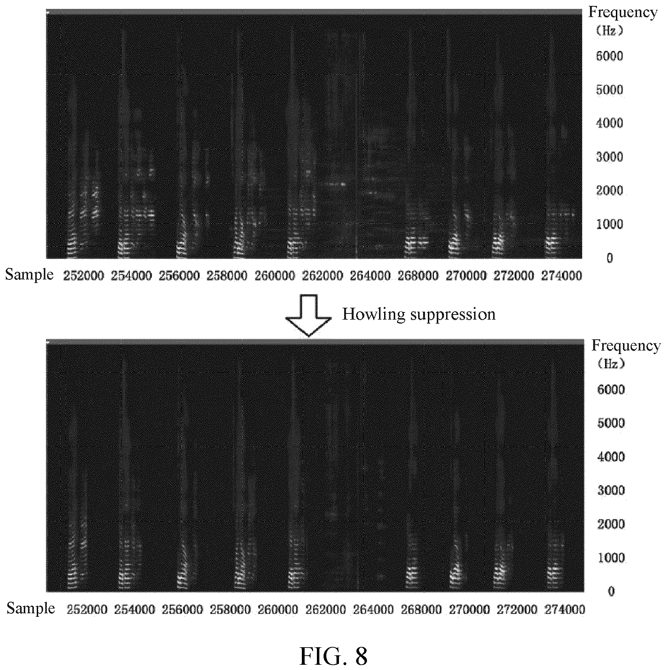

With reference to the foregoing embodiments, a howling suppression result shown in FIG. 8 can be obtained. FIG. 8 shows a comparison of audio signal processing according to an embodiment of the present disclosure, where an upper diagram is a spectrogram of the input signal before the howling suppression, and a lower diagram is a spectrogram of the signal after the howling suppression. It can be seen from the comparison that the clutter around the peak of the sample is significantly reduced, that is, howling has been suppressed by the audio processing method provided in the present disclosure before the howling is generated.

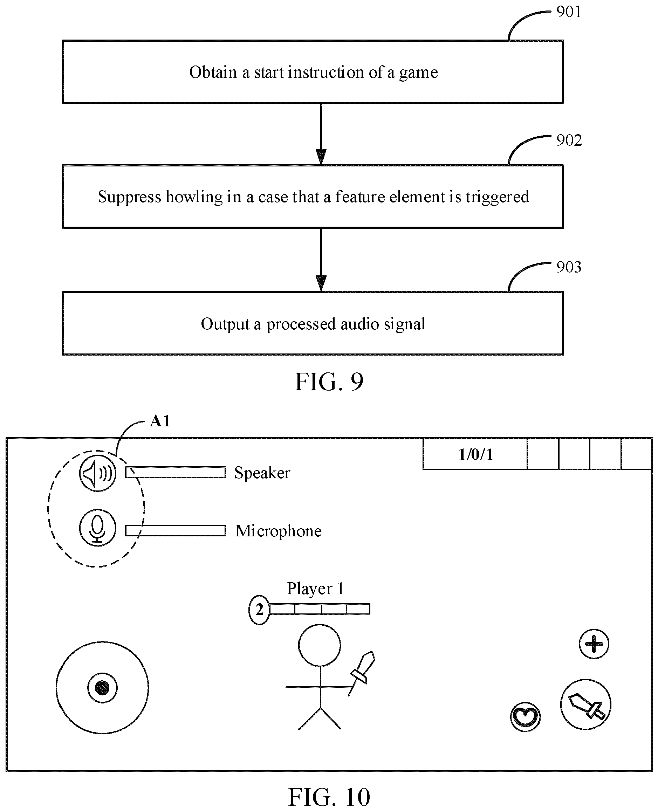

In the foregoing embodiments, the audio signal processing process is described. The following description is made in a specific scenario of game application. FIG. 9 is a flowchart of another audio signal processing method according to an embodiment of the present disclosure, and the method includes at least the following steps.

In 901, a start instruction of a game is obtained.

In this embodiment, the start instruction of the game may be a triggering of starting the game or starting a thread of a certain scene in the game, for example, entering of a battle scene.

In 902, howling suppression is performed once a feature element is triggered.

In this embodiment, the feature element is a physical or virtual button for activating a voice call function. FIG. 10 is a schematic diagram of an interface of an audio signal processing method according to an embodiment of the present disclosure. A feature element A1 in the game interface is shown. Once any of the buttons is triggered, the audio processing method in the embodiment of FIG. 3 or FIG. 4 is invoked.

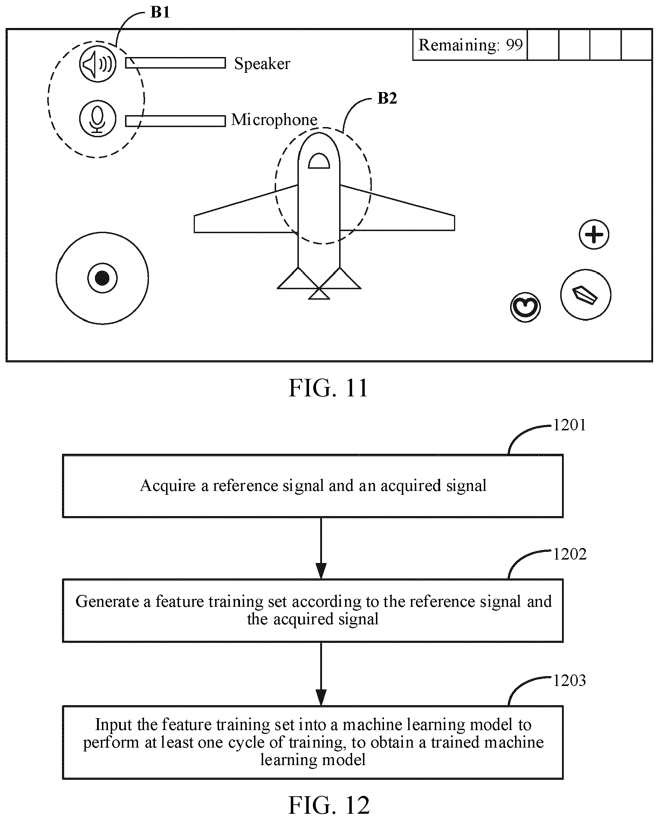

In addition, the audio processing method in the present disclosure is not only applicable in a voice call between two users, but may also be applied in a voice call among a plurality of users. FIG. 11 is a schematic diagram of an interface in another audio signal processing method according to an embodiment of the present disclosure, in which users are in a public voice scene B2. At this time, once a feature element B 1 is triggered, the audio processing method in the embodiment of FIG. 3 or FIG. 4 is invoked.

In 903, a processed audio signal is outputted.

In this embodiment, the audio signal subjected to the howling suppression is utilized to realize a clear voice call between two or more users.

By virtue of the howling suppression performed on the audio signal between users in the game, the users can make a clearer voice call without affecting the communication due to howling, so that the user experience and the accuracy of a voice call are ensured in a scenario such as the game that requires high-efficiency and high-quality voice.

In the foregoing embodiments, a machine learning model is applied. The machine learning model is pre-trained. The method may be performed by an audio processing device, which may be a terminal device or a server. The trained machine learning model may be applied to the foregoing audio signal processing solution. The scenario is described below. FIG. 12 is a flowchart of a machine learning model training method according to an embodiment of the present disclosure, and the method includes at least the following steps.

In 1201, a reference signal and a voice sample signal are acquired.

In this embodiment, the reference signal is a howling signal determined based on at least two variable elements, the variable elements including a program category, a program running period, or a program running location; and the voice sample signal is used for indicating an effective voice in a voice call progress.

It can be understood that the program category in the variable elements may be training samples in different game scenarios of different games, such as Honor of Kings or Game for Peace. The program running period indicates a time period in which the training samples are acquired. For example, a voice call function is usually activated in a game during a time period from 8 pm to 9 pm, and the voice call is relatively intense, which may be additionally marked to generate the training samples. In addition, the program running location is geographic information of the voice acquisition. For example, the training samples are acquired at different geographic locations such as a market, a classroom, or a bedroom.

The training samples are acquired under various conditions, and the howling points in the training samples are marked, so that a diversity of the training samples is ensured. Because the acquired signal is used as a voice sample, the machine learning model has a good performance in recognizing howling point(s) in voice frequency band.

In 1202, a feature training set is generated according to the reference signal and the acquired signal.

In this embodiment, the signals acquired under the different factors are assigned with labels and are classified, and corresponding howling points are marked to generate the feature training set.

In 1203, the feature training set is inputted into a machine learning model to perform at least one round of training, to obtain a trained machine learning model.

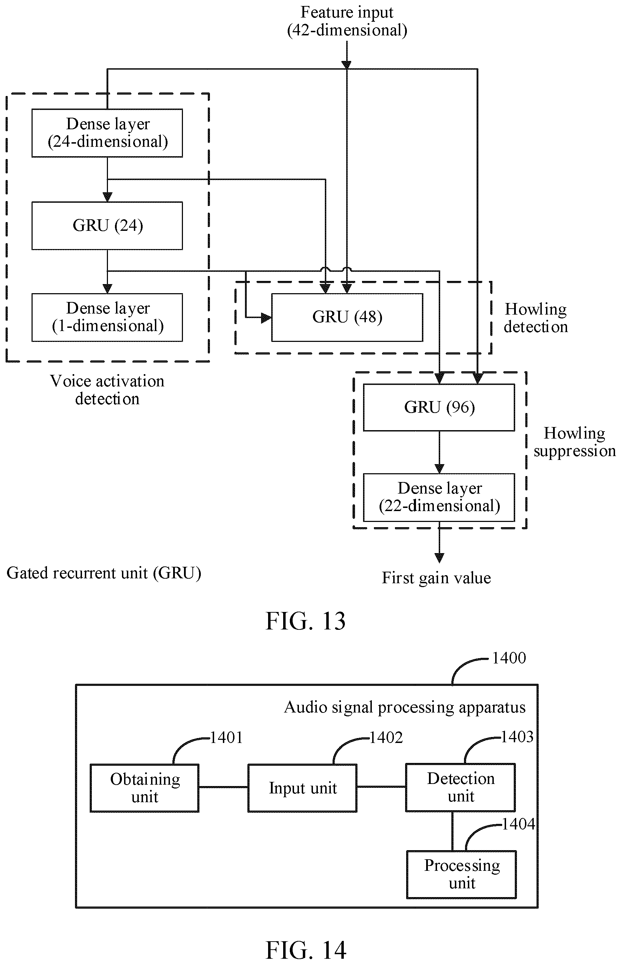

In this embodiment, the trained machine learning model is used for determining a howling point and a gain value according to the audio input signal. Specifically, FIG. 13 is a schematic flowchart of training of a machine learning model according to an embodiment of the present disclosure. An RNN model including 3-level gated recurrence units (GRUs) is shown. Compared with a simple recurrence unit, the GRU has two additional gates, where a reset gate determines whether to memorize a current state for calculating a new state, and an update gate determines how much to change the current state according to a new input. In a case that the update gate is closed, the GRU can remember training information for a long time. First, the GRU at the first layer has a 42-dimensional input, and outputs a 24-dimensional feature and a voice activity detection (VAD) flag. The GRU at the second layer inputs the initial 42-dimensional feature and the 24-dimensional feature outputted by the first layer to output a 48-dimensional feature, for estimating a howling signal. A third layer inputs the initial 42-dimensional feature and the 42-dimensional feature outputted by the second layer to obtain an output; and adjusts the output according to a gain value in a training sample to update a model parameter, thereby implementing training of the RNN model.

The training process in the present disclosure may also be applied to a deep neural network model or a convolutional neural network model, which is not repeated herein.

Through the process of training the machine learning model, the howling point distribution and a corresponding first gain value can be obtained after the audio signal is inputted into the machine learning model, and the accuracy of howling suppression in the voice frequency band is ensured.

To practice the foregoing solutions in the embodiments of the present disclosure, related apparatuses for implementing the foregoing solutions are further provided below. FIG. 14 is a schematic structural diagram of an audio signal processing apparatus according to an embodiment of the present disclosure, and the audio signal processing apparatus 1400 includes:

an obtaining unit 1401 configured to obtain a first audio input signal;

an input unit 1402 configured to input the first audio input signal into a machine learning model to obtain a first gain value, the first gain value being used for indicating a suppression parameter for a first howling point in the first audio input signal, and the first howling point being used for indicating a howling point in a frequency band corresponding to an effective audio signal;

a detection unit 1403 configured to process the first audio input signal according to the first gain value to obtain a second audio input signal; and

a processing unit 1404 configured to process the second audio input signal according to a second gain value to obtain an audio output signal, the second gain value being used for indicating a suppression parameter for a second howling point, and the second howling point being used for indicating a howling point in a frequency band corresponding to an ineffective audio signal.

Optionally, in some possible implementations of the present disclosure, the input unit 1402 is specifically configured to transform the audio input signal into frequency domain, to extract a plurality of audio features, the audio features being determined based on features of the effective audio signal or a howling sample.

The input unit 1402 is specifically configured to input the audio features into the machine learning model to determine the first howling point.

The input unit 1402 is specifically configured to determine the first gain value according to the first howling point.

The input unit 1402 is specifically configured to process the first audio input signal according to the first gain value to obtain the second audio input signal.

The detection unit 1403 is configured to check the second audio input signal to obtain the second howling point, and obtain the second gain value according to the second howling point, the second howling point being used for indicating the howling point in the frequency band corresponding to the ineffective audio signal in the second audio input signal.

The processing unit 1404 is configured to process the second audio input signal according to the second gain value to obtain the audio output signal.

Optionally, the input unit 1402 is specifically configured to transform the audio input signal into frequency domain, to extract the plurality of audio features, the audio features being determined based on features of the effective audio signal or the howling sample.

The input unit 1402 is specifically configured to input the audio features into the machine learning model to determine the first howling point.

The input unit 1402 is specifically configured to obtain the first gain value according to the first howling point.

Optionally, in some possible implementations of the present disclosure, the input unit 1402 is specifically configured to adjust the first audio input signal to a target frequency for transformation into the frequency domain.

The input unit 1402 is specifically configured to determine a plurality of sampling points in the first audio input signal transformed into the frequency domain.

The input unit 1402 is specifically configured to extract the plurality of audio features based on the sampling points.

Optionally, in some possible implementations of the present disclosure, the input unit 1402 is specifically configured to divide, based on a window function, the first audio input signal transformed into the frequency domain to obtain a plurality of sub-bands.

The input unit 1402 is specifically configured to determine the plurality of sampling points in the sub-bands.

Optionally, in some possible implementations of the present disclosure, the detection unit 1403 is specifically configured to obtain a power spectrum corresponding to the second audio input signal.

The detection unit 1403 is specifically configured to detect an extreme value in the power spectrum and determine a corresponding candidate frequency point.

The detection unit 1403 is specifically configured to determine the second howling point according to the candidate frequency point.

The detection unit 1403 is specifically configured to process the second howling point according to the second gain value to obtain the audio output signal.

Optionally, in some possible implementations of the present disclosure, the detection unit 1403 is specifically configured to obtain a plurality of frequency points adjacent to the candidate frequency point to determine a candidate range.

The detection unit 1403 is specifically configured to determine an average value of the frequency points in the candidate range to obtain a peak-to-average ratio; and

The detection unit 1403 is specifically configured to determine the candidate frequency point as the second howling point in a case that the peak-to-average ratio is greater than a howling threshold.

Optionally, in some possible implementations of the present disclosure, the detection unit 1403 is further configured to obtain feature information in the effective audio signal, the feature information being determined based on a waveform feature indicated by the effective audio signal, and the effective audio signal being used for indicating a voice sample.

The detection unit 1403 is specifically configured to detect the effective audio signal in the second audio input signal according to the feature information.

The detection unit 1403 is specifically configured to perform a locking operation on the effective audio signal, the locking operation being used for indicating an object on which the second gain value does not act.

Optionally, in some possible implementations of the present disclosure, the processing unit 1404 is specifically configured to determine a plurality of gained frames corresponding to the second howling point.

the processing unit 1404 is specifically configured to process the gained frames according to a smoothing formula to update the audio output signal.

Optionally, in some possible implementations of the present disclosure, the obtaining unit 1401 is specifically configured to obtain an acquired signal;

the obtaining unit 1401 is specifically configured to convert the acquired signal into a digital signal; and

the obtaining unit 1401 is specifically configured to input the digital signal into an amplifier to obtain the first audio input signal.

Optionally, in some possible implementations of the present disclosure, the obtaining unit 1401 is specifically configured to input the digital signal into the amplifier to obtain an amplified signal;

the obtaining unit 1401 is specifically configured to process the amplified signal according to a filter parameter to obtain a filtered amplified signal; and

the obtaining unit 1401 is specifically configured to Fourier transform the filtered amplified signal into frequency domain to obtain the first audio input signal.

Optionally, in some possible implementations of the present disclosure, the audio signal processing method is applied to a voice call in a game, and the obtaining unit 1401 is specifically configured to detect triggering of a feature element, the feature element being an element in a game interface; and
the obtaining unit 1401 is specifically configured to obtain the first audio input signal in a case that the feature element is triggered.

A first audio input signal is obtained; then the first audio input signal is inputted into a machine learning model to obtain a first gain value for processing a frequency band in which an effective audio signal is located; the first audio input signal is processed according to the first gain value to obtain a second audio input signal; next the second audio input signal is checked to obtain a second howling point, the second howling point being used for indicating a howling point in a frequency band corresponding to an ineffective audio signal in the second audio input signal; and the second audio input signal is processed according to a second gain value to obtain an audio output signal, the second gain value being used for indicating a suppression parameter for the second howling point. In this way, the howling is suppressed for the audio input signal at an initial stage and therefore will not loop with gains. Due to indication of howling points in the machine learning model, the convenience of model calculation, and further processing on the unprocessed howling point by using the second gain value, a rapid and thorough process of the howling suppression is implemented without affecting the effective audio signal, so that the accuracy and efficiency in audio processing are improved.

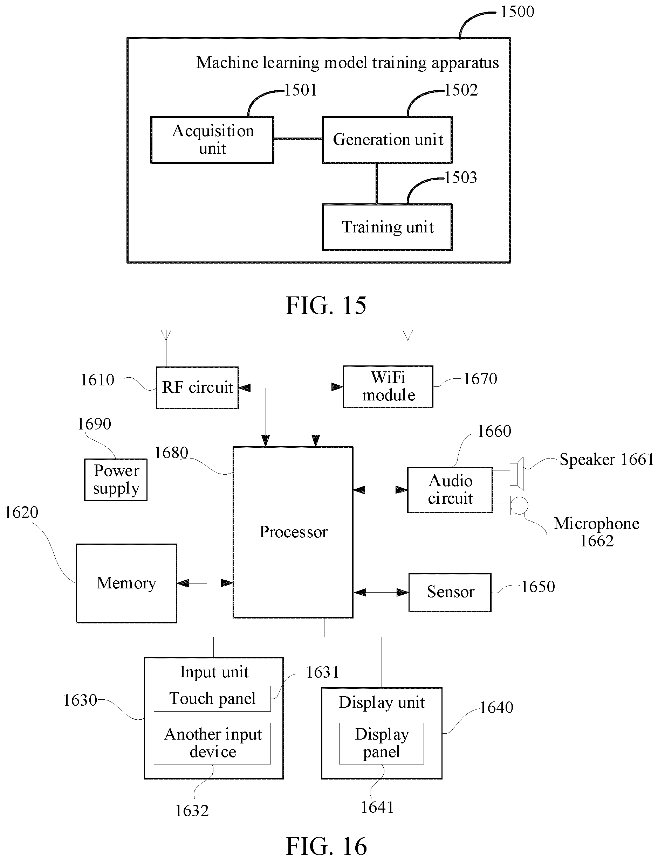

The present disclosure further provides an apparatus 1500 for training machine learning model. FIG. 15 is a schematic structural diagram of an apparatus for training machine learning model according to an embodiment of the present disclosure. The apparatus includes: an acquisition unit 1501, configured to acquire a reference signal and a voice sample signal, the reference signal being a howling signal determined based on at least two variable elements, the variable elements including a program category, a program running period, or a program running location, and the acquired signal being used for indicating an effective voice in a call process;

a generation unit 1502, configured to generate a feature training set according to the reference signal and the acquired signal; and

a training unit 1503, configured to input the feature training set into a machine learning model for at least one round of training, to obtain a trained machine learning model, the trained machine learning model being used for determining a howling point and gain value according to an audio input signal.

The embodiments of the present disclosure further provide a terminal device. FIG. 16 is a schematic structural diagram of another terminal device according to an embodiment of the present disclosure. To facilitate the description, only parts related to the embodiments of the present disclosure are shown. For specific technical details that are not described, reference may be to the method in the embodiments of the present disclosure. The terminal may be any terminal device such as a mobile phone, a tablet computer, a personal digital assistant (PDA), a point of sales (POS), an on-board computer or the like. The terminal being a mobile phone is used as an example.

FIG. 16 is a partial structural diagram of a mobile phone related to a terminal according to an embodiment of the present disclosure. Referring to FIG. 16, the mobile phone includes: a radio frequency (RF) circuit 1610, a memory 1620, an input unit 1630, a display unit 1640, a sensor 1650, an audio circuit 1660, a wireless fidelity (WiFi) module 1670, a processor 1680, and a power supply 1690. A person skilled in the art can understand that the structure of the mobile phone shown in FIG. 16 does not constitute a limitation on the mobile phone, and the mobile phone may include more or fewer components than those shown in the figure, or some components may be combined, or a different component deployment may be used.

The following describes the components of the mobile phone in detail with reference to FIG. 16.

The RF circuit 1610 may be configured to receive and send signals during an information receiving and sending process or a call process. Specifically, the RF circuit 1610 receives downlink information from a base station, then delivers the downlink information to the processor 1680 for processing, and sends designed uplink data to the base station. Usually, the RF circuit 1610 includes, but not limited to, an antenna, at least one amplifier, a transceiver, a coupler, a low noise amplifier (LNA), and a duplexer. In addition, the RF circuit 1610 may communicate with a network and another device through wireless communication.

The memory 1620 may be configured to store software programs and modules. The processor 1680 runs the software programs and the modules stored in the memory 1620, to implement various functional applications and data processing of the mobile phone.

The input unit 1630 may be configured to receive input digit or character information, and generate a key signal input related to the user setting and function control of the mobile phone. Specifically, the input unit 1630 may include a touch panel 1631 and another input device 1632.

The display unit 1640 may be configured to display information inputted by the user or information provided for the user, and various menus of the mobile phone.

The mobile phone may further include at least one sensor 1650 such as an optical sensor, a motion sensor, and other sensors.

The audio circuit 1660, a speaker 1661, and a microphone 1662 may provide audio interfaces between the user and the mobile phone. The audio circuit 1660 may convert received audio data into an electrical signal and transmit the electrical signal to the speaker 1661. The speaker 1661 converts the electrical signal into a sound signal for output. On the other hand, the microphone 1662 converts an acquired sound signal into an electrical signal. The audio circuit 1660 receives the electrical signal, converts the electrical signal into audio data, and outputs the audio data to the processor 1680 for processing. Then, the processor transmits the audio data to, for example, another mobile phone through the RF circuit 1610, or outputs the audio data to the memory 1620 for further processing.

WiFi is a short-range wireless transmission technology. Although FIG. 16 shows the WiFi module 1670, it can be understood that the Wi-Fi module is not a necessary component of the mobile phone, and the Wi-Fi module may be omitted as required without changing the essence of the present disclosure is not changed.

The processor 1680 is a control center of the mobile phone, and is connected to various parts of the mobile phone through various interfaces and lines. By running or executing software programs and/or modules stored in the memory 1620, and invoking data stored in the memory 1620, the processor performs various functions of the mobile phone and performs data processing, so that the entire mobile phone is monitored.

In the embodiments of the present disclosure, the processor 1680 included in the terminal further has a function of performing each step of the above audio signal processing method or the model training method.

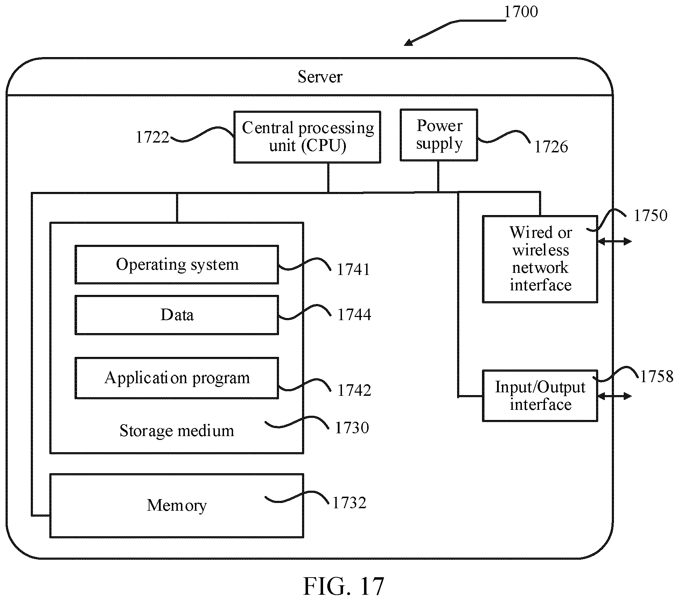

The embodiments of the present disclosure further provide a server. FIG. 17 is a schematic structural diagram of a server according to an embodiment of the present disclosure. The server 1700 may vary greatly due to different configurations or performance, and may include one or more central processing units (CPUs) 1722 and a memory 1732, and one or more storage media 1730 that store application programs 1742 or data 1744.

The server 1700 may further include one or more power supplies 1726, one or more wired or wireless network interfaces 1750, one or more input/output interfaces 1758, and/or one or more operating systems 1741.

The steps performed by the model training apparatus in the foregoing embodiments may be based on the server structure shown in FIG. 17.

The embodiments of the present disclosure further provide a computer-readable storage medium having a computer program stored thereon, the computer program being configured to implement the steps performed by the audio signal processing apparatus in the foregoing method described in the embodiments of FIG. 2 to FIG. 13.

The embodiments of the present disclosure further provide a computer program product including audio signal processing instructions, the computer program product, when running on a computer, causing the computer to perform the steps performed by the audio signal processing apparatus in the foregoing method described in the embodiments of FIG. 2 to FIG. 13.

The embodiments of the present disclosure further provide an audio signal processing system. The audio signal processing system may include the audio signal processing apparatus described in the embodiment of FIG. 14 or the terminal device in FIG. 16.

A person skilled in the art can clearly understand that for convenience and conciseness of description, for specific working processes of the foregoing systems, devices and units, reference may be made to the corresponding processes in the foregoing method embodiments, and details are not described herein again.

It should be understood that the system, apparatus, and method disclosed in several embodiments of the present disclosure may be implemented in other manners.

When the integrated unit is implemented in the form of a software functional unit and sold or used as an independent product, the integrated unit may be stored in a computer-readable storage medium. Based on such an understanding, the technical solutions of the present disclosure or the part contributing to the related art, or all or some of the technical solutions may be implemented in the form of a software product. The computer software product is stored in a storage medium and includes several instructions for instructing a computer device (which may be a personal computer, an audio signal processing apparatus, a network device, or the like) to perform all or some of the steps of the methods described in the embodiments of the present disclosure.

The foregoing embodiments are merely intended for describing the technical solutions of the present disclosure, but not for limiting the present disclosure. Although the present disclosure is described in detail with reference to the foregoing embodiments, persons of ordinary skill in the art are to understand that they may still make modifications to the technical solutions described in the foregoing embodiments or make equivalent replacements to some technical features thereof, without departing from the scope of the appended claims.

**Claims**

1.  An audio signal processing method, executable by a terminal device, the method comprising:

    obtaining (301) a first audio input signal;
    inputting (302) the first audio input signal into a machine learning model to obtain a first howling point, the first howling point being a frequency point at which a first loop gain is greater than or equal to 1 in a first frequency band, the first frequency band corresponding to an effective audio signal in the first audio input signal, the effective audio signal being a desired audio in the first audio input signal;
    obtaining (302) a first gain value according to the first howling point, the first gain value being used for indicating a suppression factor to be applied on an audio signal corresponding to the first howling point;
    processing the first audio input signal according to the first gain value to obtain a second audio input signal;
    checking (303) the second audio input signal to obtain a second howling point, the second howling point being a frequency point at which a second loop gain is greater than or equal to 1 in a second frequency band, the second frequency band corresponding to an ineffective audio signal in the second audio input signal, the ineffective audio signal being an interference audio in the first audio input signal;
    obtaining (303) a second gain value according to the second howling point, the second gain value indicating a suppression factor to be applied on an audio signal corresponding to the second howling point; and
    processing (304) the second audio input signal according to the second gain value to obtain an audio output signal.

2.  The method according to claim 1, the inputting (302) the first audio input signal into a machine learning model to obtain a first howling point comprising:

    transforming the first audio input signal into frequency domain to extract a plurality of audio features, the audio features being determined based on features of the effective audio signal;
    inputting the audio features into the machine learning model to determine the first howling point.

3.  The method according to claim 2, the transforming the first audio input signal into frequency domain to extract a plurality of audio features comprising:

    adjusting the first audio input signal to a target frequency for transformation into the frequency domain;
    determining a plurality of sampling points in the first audio input signal transformed into the frequency domain; and
    extracting the plurality of audio features based on the sampling points.

4.  The method according to claim 3, the determining a plurality of sampling points in the first audio input signal transformed into the frequency domain comprising:

    dividing, based on a window function, the first audio input signal transformed into the frequency domain to obtain a plurality of sub-bands; and
    determining the plurality of sampling points in the sub-bands.

5.  The method according to claim 1, the processing (304) the second audio input signal according to the second gain value to obtain an audio output signal comprising:

obtaining a power spectrum corresponding to the second audio input signal;

detecting an extreme value in the power spectrum, and determining a candidate frequency point corresponding to the extreme value;

determining the second howling point according to the candidate frequency point; and

processing the second howling point according to the second gain value to obtain the audio output signal.

6. The method according to claim 5, the determining the second howling point according to the candidate frequency point comprising:

obtaining a plurality of frequency points adjacent to the candidate frequency point to determine a candidate range;

determining an average frequency value of the frequency points in the candidate range to obtain a peak-to-average ratio; and

determining the candidate frequency point as the second howling point in a case that the peak-to-average ratio is greater than a howling threshold.

7. The method according to claim 5, after the determining the second howling point according to the candidate frequency point, further comprising:

obtaining feature information in the effective audio signal, the feature information being determined based on a waveform feature indicated by the effective audio signal;

detecting the corresponding effective audio signal in the second audio input signal according to the feature information; and

performing a lock operation on the effective audio signal, the lock operation being used for indicating an object on which the second gain value does not act.

8. The method according to claim 5, further comprising:

determining a plurality of gained frames corresponding to the second howling point; and

processing the gained frames according to a smoothing formula to update the audio output signal.

9. The method according to any one of claims 1 to 8, the audio signal processing method being applied to a voice call in a game, and the obtaining a first audio input signal comprising:

detecting triggering of a feature element, the feature element being an element in an interface of the game; and

obtaining the first audio input signal in a case that the feature element is triggered.

10. The method according to any one of claims 1 to 8, the machine learning model being a recurrent neural network model, and the first audio input signal and the audio output signal being applied in a voice call of the terminal device.

11. A computer device comprising a processor and a memory,
the memory being configured to store program codes; and the processor being configured to perform, according to instructions in the program codes, the audio signal processing method according to any one of claims 1 to 10.

12. A computer-readable storage medium storing with a computer program, the computer program being configured to implement the audio signal processing method according to any one of claims 1 to 10.

13. A computer program product comprising instructions, the computer program product, when running on a computer, causing the computer to perform the audio signal processing method according to any one of claims 1 to 10.

**Patentansprüche**

1. Verfahren zur Audiosignalverarbeitung, das von einem Endgerät ausführbar ist, wobei das Verfahren umfasst:

Erhalten (301) eines ersten Audioeingangssignals;

Eingeben (302) des ersten Audioeingangssignals in ein maschinelles Lernmodell, um einen ersten Heulpunkt zu erhalten, wobei der erste Heulpunkt ein Frequenzpunkt ist, bei dem eine erste Schleifenverstärkung größer als oder gleich 1 in einem ersten Frequenzband ist, wobei das erste Frequenzband einem effektiven Audiosignal in dem ersten Audioeingangssignal entspricht, wobei das effektive Audiosignal ein gewünschtes Audio in dem ersten Audioeingangssignal ist;

Erhalten (302) eines ersten Verstärkungswertes entsprechend dem ersten Heulpunkt, wobei der erste Verstärkungswert zum Anzeigen eines Unterdrückungsfaktors verwendet wird, der auf ein Audiosignal entsprechend dem ersten Heulpunkt anzuwenden ist;

Verarbeiten des ersten Audioeingangssignals gemäß dem ersten Verstärkungswert, um ein zweites Audioeingangssignal zu erhalten;

Prüfen (303) des zweiten Audioeingangssignals, um einen zweiten Heulpunkt zu erhalten, wobei der zweite Heulpunkt ein Frequenzpunkt ist, bei dem eine zweite Schleifenverstärkung größer als oder gleich 1 in einem zweiten Frequenzband ist, wobei das zweite Frequenzband einem unwirksamen Audiosignal in dem zweiten Audioeingangssignal entspricht, wobei das unwirksame Audiosignal eine Interferenz in dem ersten Audioeingangssignal ist;

Erhalten (303) eines zweiten Verstärkungswerts gemäß dem zweiten Heulpunkt, wobei der zweite Verstärkungswert einen Unterdrückungsfaktor angibt, der auf ein Audiosignal entsprechend dem zweiten Heulpunkt anzuwenden ist; und

Verarbeiten (304) des zweiten Audioeingangssignals gemäß dem zweiten Verstärkungswert, um ein Audioausgangssignal zu erhalten.

2. Verfahren nach Anspruch 1, wobei das Eingeben (302) des ersten Audioeingangssignals in ein maschinelles Lernmodell, um einen ersten Heulpunkt zu erhalten, umfasst:

Transformieren des ersten Audioeingangssignals in den Frequenzbereich, um eine Vielzahl von Audiomerkmalen zu extrahieren, wobei die Audiomerkmale auf der Grundlage von Merkmalen des effektiven Audiosignals bestimmt werden;

Eingeben der Audiomerkmale in das maschinelle Lernmodell, um den ersten Heulpunkt zu bestimmen.

3. Verfahren nach Anspruch 2, wobei das Transformieren des ersten Audioeingangssignals in den Frequenzbereich zum Extrahieren einer Vielzahl von Audiomerkmalen umfasst:

Einstellen des ersten Audioeingangssignals auf eine Zielfrequenz zur Transformation in den Frequenzbereich;

Bestimmen einer Vielzahl von Abtastpunkten in dem in den Frequenzbereich transformierten ersten Audioeingangssignal; und

Extrahieren der Vielzahl von Audiomerkmalen auf der Grundlage der Abtastpunkte.

4. Verfahren nach Anspruch 3, wobei das Bestimmen einer Vielzahl von Abtastpunkten in dem in den Frequenzbereich transformierten ersten Audioeingangssignal umfasst:

Unterteilen des in den Frequenzbereich transformierten ersten Audioeingangssignals auf der Grundlage einer Fensterfunktion, um eine Vielzahl von Teilbändern zu erhalten; und

Bestimmen der Vielzahl von Abtastpunkten in den Teilbändern.

5. Verfahren nach Anspruch 1, wobei die Verarbeitung (304) des zweiten Audioeingangssignals gemäß dem zweiten Verstärkungswert zum Erhalt eines Audioausgangssignals umfasst:

Erhalten eines Leistungsspektrums, das dem zweiten Audioeingangssignal entspricht;

Erfassen eines Extremwerts in dem Leistungsspektrum und Bestimmen eines Kandidatenfrequenzpunkts, der dem Extremwert entspricht;

Bestimmen des zweiten Heulpunktes entsprechend dem Kandidatenfrequenzpunkt; und

Verarbeiten des zweiten Heulpunkts gemäß dem zweiten Verstärkungswert, um das Audioausgangssignal zu erhalten.

6. Verfahren nach Anspruch 5, wobei die Bestimmung des zweiten Heulpunkts entsprechend dem Kandidatenfrequenzpunkt umfasst:

Erhalten mehrerer Frequenzpunkte neben dem Kandidatenfrequenzpunkt, um einen Kandidatenbereich zu bestimmen;

Bestimmen eines durchschnittlichen Frequenzwertes der Frequenzpunkte in dem Kandidatenbereich, um ein Spitzen-Durchschnitts-Verhältnis zu erhalten; und

Bestimmen des Kandidatenfrequenzpunktes als den zweiten Heulpunkt in dem Fall, dass das Verhältnis von Spitzenwert zu Durchschnittswert größer als ein Heulschwellenwert ist.

7. Verfahren nach Anspruch 5, das nach dem Bestimmen des zweiten Heulpunkts gemäß dem Kandidatenfrequenzpunkt ferner umfasst:

Erhalten von Merkmalsinformationen in dem effektiven Audiosignal, wobei die Merkmalsinformationen auf der Grundlage eines Wellenformmerkmals bestimmt werden, das durch das effektive Audiosignal angezeigt wird;
Erfassen des entsprechenden effektiven Audiosignals in dem zweiten Audioeingangssignal gemäß der Merkmalsinformation; und
Durchführen einer Verriegelungsoperation an dem effektiven Audiosignal, wobei die Verriegelungsoperation zum Anzeigen eines Objekts verwendet wird, auf das der zweite Verstärkungswert nicht wirkt.

8. Verfahren nach Anspruch 5, ferner umfassend:

Bestimmen einer Vielzahl von gewonnenen Frames, die dem zweiten Heulpunkt entsprechen; und
Verarbeiten der gewonnenen Rahmen gemäß einer Glättungsformel, um das Audioausgangssignal zu aktualisieren.

9. Verfahren nach einem der Ansprüche 1 bis 8, wobei das Audiosignalverarbeitungsverfahren auf einen Sprachanruf in einem Spiel angewandt wird und das Erhalten eines ersten Audioeingangssignals umfasst:

Erfassen des Auslösens eines Merkmalselements, wobei das Merkmalselement ein Element in einer Schnittstelle des Spiels ist; und
Erhalten des ersten Audioeingangssignals in einem Fall, in dem das Merkmalselement ausgelöst wird.

10. Verfahren nach einem der Ansprüche 1 bis 8, wobei das maschinelle Lernmodell ein rekurrentes neuronales Netzwerkmodell ist und das erste Audioeingangssignal und das Audioausgangssignal in einem Sprachanruf des Endgeräts verwendet werden.

11. Computervorrichtung mit einem Prozessor und einem Speicher, wobei der Speicher so konfiguriert ist, dass er Programmcodes speichert; und wobei der Prozessor so konfiguriert ist, dass er gemäß den Anweisungen in den Programmcodes das Audiosignalverarbeitungsverfahren nach einem der Ansprüche 1 bis 10 durchführt.

12. Computerlesbares Speichermedium, das ein Computerprogramm speichert, wobei das Computerprogramm so konfiguriert ist, dass es das Audiosignalverarbeitungsverfahren nach einem der Ansprüche 1 bis 10 implementiert.

13. Computerprogrammprodukt mit Befehlen, wobei das Computerprogrammprodukt, wenn es auf einem Computer läuft, den Computer veranlasst, das Audiosignalverarbeitungsverfahren nach einem der Ansprüche 1 bis 10 durchzuführen.

**Revendications**

1. Procédé de traitement de signal audio, exécutable par un dispositif terminal, le procédé comprenant :

l'obtention (301) d'un premier signal d'entrée audio ;
l'application en entrée (302) du premier signal d'entrée audio dans un modèle d'apprentissage machine pour obtenir un premier point de sifflement, le premier point de sifflement étant un point de fréquence auquel un premier gain de boucle est supérieur ou égal à 1 dans une première bande de fréquences, la première bande de fréquences correspondant à un signal audio efficace dans le premier signal d'entrée audio, le signal audio efficace étant un audio souhaité dans le premier signal d'entrée audio ;
l'obtention (302) d'une première valeur de gain en fonction du premier point de sifflement, la première valeur de gain étant utilisée pour indiquer un facteur de suppression à appliquer sur un signal audio correspondant au premier point de sifflement ;
le traitement du premier signal d'entrée audio en fonction de la première valeur de gain pour obtenir un second signal d'entrée audio ;
le contrôle (303) du second signal d'entrée audio pour obtenir un second point de sifflement, le second point de sifflement étant un point de fréquence auquel un second gain de boucle est supérieur ou égal à 1 dans une seconde bande de fréquences, la seconde bande de fréquences correspondant à un signal audio inefficace dans le second signal d'entrée audio, le signal audio inefficace étant un audio d'interférence dans le premier signal d'entrée audio ;

l'obtention (303) d'une seconde valeur de gain en fonction du second point de sifflement, la seconde valeur de gain indiquant un facteur de suppression à appliquer sur un signal audio correspondant au second point de sifflement ; et

le traitement (304) du second signal d'entrée audio en fonction de la seconde valeur de gain pour obtenir un signal de sortie audio.

2. Procédé selon la revendication 1, l'application en entrée (302) du premier signal d'entrée audio dans un modèle d'apprentissage machine pour obtenir un premier point de sifflement comprenant :

la transformation du premier signal d'entrée audio dans un domaine fréquentiel pour extraire une pluralité de caractéristiques audio, les caractéristiques audio étant déterminées sur la base de caractéristiques du signal audio efficace ;

l'application en entrée des caractéristiques audio dans le modèle d'apprentissage machine pour déterminer le premier point de sifflement.

3. Procédé selon la revendication 2, la transformation du premier signal d'entrée audio dans un domaine fréquentiel pour extraire une pluralité de caractéristiques audio comprenant :

l'ajustement du premier signal d'entrée audio à une fréquence cible pour une transformation dans le domaine fréquentiel ;

la détermination d'une pluralité de points d'échantillonnage dans le premier signal d'entrée audio transformé dans le domaine fréquentiel ; et

l'extraction de la pluralité de caractéristiques audio sur la base des points d'échantillonnage.

4. Procédé selon la revendication 3, la détermination d'une pluralité de points d'échantillonnage dans le premier signal d'entrée audio transformé dans le domaine fréquentiel comprenant :

la division, sur la base d'une fonction de fenêtre, du premier signal d'entrée audio transformé dans le domaine fréquentiel pour obtenir une pluralité de sous-bandes ; et

la détermination de la pluralité de points d'échantillonnage dans les sous-bandes.

5. Procédé selon la revendication 1, le traitement (304) du second signal d'entrée audio en fonction de la seconde valeur de gain pour obtenir un signal de sortie audio comprenant :

l'obtention d'un spectre de puissance correspondant au second signal d'entrée audio ;

la détection d'une valeur extrême dans le spectre de puissance, et la détermination d'un point de fréquence candidat correspondant à la valeur extrême ;

la détermination du second point de sifflement en fonction du point de fréquence candidat ; et

le traitement du second point de sifflement en fonction de la seconde valeur de gain pour obtenir le signal de sortie audio.

6. Procédé selon la revendication 5, la détermination du second point de sifflement en fonction du point de fréquence candidat comprenant :

l'obtention d'une pluralité de points de fréquence adjacents au point de fréquence candidat pour déterminer une plage candidate ;

la détermination d'une valeur de fréquence moyenne des points de fréquence dans la plage candidate pour obtenir un rapport valeur de crête/valeur moyenne ; et

la détermination du point de fréquence candidat comme le second point de sifflement dans un cas où le rapport valeur de crête/valeur moyenne est supérieur à un seuil de sifflement.

7. Procédé selon la revendication 5, après la détermination du second point de sifflement en fonction du point de fréquence candidat, comprenant en outre :

l'obtention d'informations de caractéristique dans le signal audio efficace, les informations de caractéristique étant déterminées sur la base d'une caractéristique de forme d'onde indiquée par le signal audio efficace ;
la détection du signal audio efficace correspondant dans le second signal d'entrée audio en fonction des informations de caractéristique ; et
la réalisation d'une opération de blocage sur le signal audio efficace, l'opération de blocage étant utilisée pour indiquer un objet sur lequel la seconde valeur de gain n'agit pas.

8. Procédé selon la revendication 5, comprenant en outre :

la détermination d'une pluralité de trames acquises correspondant au second point de sifflement ; et
le traitement des trames acquises en fonction d'une formule de lissage pour mettre à jour le signal de sortie audio.

9. Procédé selon l'une quelconque des revendications 1 à 8, le procédé de traitement de signal audio étant appliqué à un appel vocal dans un jeu, et l'obtention d'un premier signal d'entrée audio comprenant :

la détection d'un déclenchement d'un élément de caractéristique, l'élément de caractéristique étant un élément dans une interface du jeu ; et
l'obtention du premier signal d'entrée audio dans un cas où l'élément de caractéristique est déclenché.

10. Procédé selon l'une quelconque des revendications 1 à 8, le modèle d'apprentissage machine étant un modèle de réseau neuronal récurrent, et le premier signal d'entrée audio et le signal de sortie audio étant appliqués dans un appel vocal du dispositif terminal.

11. Dispositif informatique comprenant un processeur et une mémoire,
la mémoire étant configurée pour stocker des codes de programme ; et le processeur étant configuré pour réaliser, en fonction des instructions dans les codes de programme, le procédé de traitement de signal audio selon l'une quelconque des revendications 1 à 10.

12. Support de stockage lisible par ordinateur stockant un programme informatique, le programme informatique étant configuré pour mettre en oeuvre le procédé de traitement de signal audio selon l'une quelconque des revendications 1 à 10.

13. Produit de programme informatique comprenant des instructions, le produit de programme informatique, quand il est exécuté sur un ordinateur, amenant l'ordinateur à réaliser le procédé de traitement de signal audio selon l'une quelconque des revendications 1 à 10.

FIG. 1

Acquire　　　　Input　　　　　　　　　　Input

User　　Terminal
　　　　device

Machine
learning model

Howling
suppression

Audio
output

Train

Howling
sample

Effective voice

FIG. 2

301

Obtain a first audio input signal

302

Input the first audio input signal into a machine learning model to
obtain a first howling point, and obtain a first gain value according
to the first howling point

303

Detect a second audio input signal to obtain a second howling point,
and obtain a second gain value according to the second howling
point

304

Process the second audio input signal according to the second gain
value to obtain an audio output signal

FIG. 3

Obtain a first audio input signal ⌐401

Input the first audio input signal into a machine learning model to obtain a first gain value ⌐402

Process the first audio input signal according to the first gain value to obtain a second audio input signal ⌐403

Detect the second audio input signal to obtain a second howling point ⌐404

Detect the second audio input signal for voice protection ⌐405

Process the second audio input signal according to a second gain value ⌐406

Smooth a frame processed according to the second gain value ⌐407

Obtain an audio output signal ⌐408

FIG. 4

FIG. 5

FIG. 6

Input an audio signal of a target frequency, and divide the audio signal into 20 milliseconds per frame — 701

Transform into a frequency domain — 702

Extract 42 feature values — 703

Calculate a first gain value through a recurrent neural network model — 704

Suppress howling at a first howling point according to the first gain value — 705

Detect a second howling point, and obtain a second gain value — 706

Suppress howling according to the second gain value — 707

Transform into a time domain and output an audio signal — 708

FIG. 7

Sample  252000  254000  256000  258000  260000  262000  264000  268000  270000  272000  274000

Howling suppression

Sample  252000  254000  256000  258000  260000  262000  264000  268000  270000  272000  274000

FIG. 8

901

Obtain a start instruction of a game

902

Suppress howling in a case that a feature element is triggered

903

Output a processed audio signal

FIG. 9

A1

| 1/0/1 | | | | | |

Speaker

Microphone

Player 1

2

FIG. 10

FIG. 11

FIG. 12

Feature input
(42-dimensional)

Dense layer
(24-dimensional)

GRU (24)

Dense layer
(1-dimensional)

GRU (48)

Howling
detection

Voice activation
detection

GRU (96)

Howling
suppression

Dense layer
(22-dimensional)

Gated recurrent unit (GRU)

First gain value

FIG. 13

1400

Audio signal processing apparatus

1401

1402

1403

Obtaining
unit

Input unit

Detection
unit

1404

Processing
unit

FIG. 14

1500

Machine learning model training apparatus

1501

Acquisition unit

1502

Generation unit

1503

Training unit

FIG. 15

1610

RF circuit

WiFi module

1670

1690

1680

Power supply

1660

Audio circuit

Speaker 1661

Microphone 1662

1620

Processor

Memory

Sensor

1650

Input unit

1631

Touch panel

Display unit

1640

1630

Another input device

Display panel

1632

1641

FIG. 16

1700

Server

1722 — Central processing unit (CPU)

Power supply — 1726

Operating system — 1741

Data — 1744

Application program — 1742

Storage medium — 1730

Memory — 1732

Wired or wireless network interface — 1750

Input/Output interface — 1758

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109121057 A
- US 2018090152 A1
- CN 108449493
- CN 109637552 A
- CN 110536215 A